# EUROPÄISCHE PATENTSCHRIFT

(11) **EP 1 911 946 B1**
(45) Veröffentlichungstag und Bekanntmachung des Hinweises auf die Patenterteilung: **13.12.2017**
(21) Anmeldenummer: 07019622.5
(22) Anmeldetag: 08.10.2007
(51) Int. Cl.: F02M 26/00

(54) **Vorrichtung zur Ladeluftkühlung für einen Verbrennungsmotor, System mit einer Vorrichtung zur Ladeluftkühlung**
Device for charge air cooling for a combustion motor, system with a device for charge air cooling
Dispositif de refroidissement de l'air de suralimentation pour un moteur à combustion interne, système doté d'un dispositif de refroidissement de l'air de suralimentation

(30) Priorität: 11.10.2006 DE 102006048485
(43) Veröffentlichungstag der Anmeldung: 16.04.2008
(73) Patentinhaber: MAHLE Behr GmbH & Co. KG, 70469 Stuttgart (DE)
(72) Erfinder: Burk, Roland, 70469 Stuttgart (DE)
(74) Vertreter: Grauel, Andreas

(56) Entgegenhaltungen:
- EP-A- 1 336 736
- EP-A- 1 496 221
- WO-A-94/12780
- WO-A-2005/033489
- WO-A1-00/17584
- DE-A1- 3 916 466
- DE-B3-102004 025 187
- US-A- 3 522 841

## Beschreibung

Zur Erhöhung der Leistungsdichte von Verbrennungsmotoren sowie zur Verbesserung des Verbrauchs- und Emissionsverhaltens wird die vom Verbrennungsmotor angesaugte Luft in einem einstufigen oder mehrstufigen Prozess durch zumindest einen Kompressor, insbesondere Turbolader, oder bei mehrstufiger Aufladung durch mehrere Kompressoren, insbesondere Turbolader, aufgeladen. Bei der Aufladung erwärmt sich die Ladeluft und muss infolgedessen mittels eines oder mittels mehrerer Ladeluftkühlstufen nach der Aufladung wieder abgekühlt werden.

Ein weiteres Mittel zur Senkung der Emissionen des Verbrennungsmotors stellt die Abgaskühlung von rückgeführtem Abgas dar, dabei wird ein Teil des Abgases, insbesondere in einem oder mehreren Abgaswärmetauschern, gekühlt und dem Motor, insbesondere der Ladeluft, anschließend wieder zugeführt.

Bekannt ist eine mehrstufige Kühlung der Ladeluft, bei der zumindest eine Kühlstufe ein Verdampfer ist, der mit dem Kältekreislauf einer Klimaanlage verbunden ist. Dabei wird der Verdampfer zur Ladeluftkühlung vorzugsweise möglichst nahe am oder im Luftverteiler angeordnet, um insbesondere eine Wiederaufwärmung der Ladeluft aufgrund der hohen Motortemperatur zu verhindern.

Aus der US 5,269,143 ist ein Kühlsystem zur Kühlung von Ladeluft bekannt, das im Inneren eines Verbrennungsmotors angeordnet ist. Das System weist ein zweistufiges Turbolader-Subsystem mit zwei von Turbinen angetriebenen Kompressoren auf, die in Reihe mit zwei Zwischenkühlern und einem Kältemittel-Subsystem angeordnet sind.

Ferner ist aus der EP1342893 eine Vorrichtung zur Kühlung von Ladeluft bekannt.

Die WO 2005/033489 A1 offenbart einen Ladeluftkühler eines Kraftfahrzeugs, bestehend aus einem Wärmeübertragerblock mit von Ladeluft durchströmbaren Rohren und aus mit den Rohren verbundenen Luftkästen, die einen Ladelufteinlass und einen Ladeluftauslass aufweisen, wobei ein Teil der Rohre verschließbar ist.

Die US 3 522 841 offenbart eine Luftversorgungseinrichtung einer Klimaanlage mit konstanter Luftversorgung. Die WO 00/17584 A1 offenbart eine Luftbehandlungsvorrichtung für eine Klimaanlage.

Es ist Aufgabe der vorliegenden Erfindung, eine Vorrichtung zur Ladeluftkühlung für einen Verbrennungsmotor der eingangs genannten Art kostengünstiger auszubilden und zu verbessern sowie insbesondere eine Temperatursträhnigkeit des gekühlten Mediums, insbesondere der Ladeluft, zu vermeiden bzw. zu verringern.

Die Aufgabe wird durch die Merkmale des Anspruchs 1 gelöst.

Es wird eine Vorrichtung zur Ladeluftkühlung für einen Verbrennungsmotor vorgeschlagen mit zumindest einem ersten Wärmetauscher zur Ladeluftkühlung, mit zumindest einem ersten Strömungskanal zur Durchströmung für einen ersten Teilstrom eines ersten Mediums, mit zumindest einem zweiten Strömungskanal zur Durchströmung für einen zweiten Teilstrom des ersten Mediums sowie mit zumindest einem dritten Strömungskanal zur Durchströmung für ein Kühl- und/oder Kältemittel, wobei der erste Strömungskanal in thermischer Verbindung mit dem zumindest einen dritten Strömungskanal steht und der zumindest eine zweite Strömungskanal thermisch isoliert ist, wobei zumindest eine Regelvorrichtung zur Temperaturregelung und gleichmäßigen Temperaturdurchmischung der beiden Teilströme nach Durchströmen des ersten Wärmetauschers vorgesehen ist.

Unter "thermisch isoliert" soll insbesondere verstanden werden, dass der zweite Strömungskanal weitgehend entkoppelt ist.

Der zumindest eine Wärmetauscher zur Ladeluftkühlung weist zumindest einen ersten Strömungskanal, insbesondere mehrere erste Strömungskanäle, zur Durchströmung für ein zu kühlendes erstes Medium, insbesondere Ladeluft, auf. Ferner weist der zumindest eine erste Wärmetauscher zur Ladeluftkühlung zumindest einen zweiten Strömungskanal, insbesondere eine Mehrzahl von zweiten Strömungskanälen, zur Durchströmung für im wesentlichen nicht zu kühlendes erstes Medium, insbesondere Ladeluft auf, wobei hier zumindest ein zweiter Strömungskanal, insbesondere die Mehrzahl an zweiten Strömungskanälen, zum Bypassen von erstem Medium, insbesondere von Ladeluft, dient. Ferner weist der zumindest eine erste Wärmetauscher zumindest einen oder zwei dritte Strömungskanäle, insbesondere eine Mehrzahl von dritten Strömungskanälen, zur Durchströmung für ein Kühl- und/oder Kältemittel, insbesondere eines Kühlmittelkreislaufs oder eines Kältemittelkreislaufs, auf. Zumindest ein Gehäuse, insbesondere zumindest ein Ansaugrohrbereich, dient zur Aufnahme des zumindest einen ersten Wärmetauschers. Zumindest eine Regelvorrichtung zur Temperaturregelung und/oder gleichmäßigen Temperaturdurchmischung des ersten Mediums, insbesondere der Ladeluft, nach Durchströmen des ersten Wärmetauschers dient dazu, insbesondere eine einheitliche Temperatur des ersten Mediums, insbesondere der Ladeluft dadurch herzustellen, dass insbesondere erstes gekühltes Medium mit erstem ungekühlten Medium vermischt wird.

In einer vorteilhaften Ausgestaltung weist die Regelvorrichtung zumindest ein Verschlusselement zum zumindest bereichsweisen Verschließen des zumindest einen ersten Strömungskanals und/oder des zumindest einen zweiten Strömungskanals auf. Auf diese Weise kann die Temperatur des ersten Mediums, insbesondere der Ladeluft und/oder des rückgeführten Abgases, nach Durchströmen des zumindest ersten Wärmetauschers besonders vorteilhaft eingestellt und geregelt werden.

In einer vorteilhaften Weiterbildung ist die Regelvorrichtung lamellenschieberartig ausgebildet. Unter "lamellenschieberartig" ist dabei insbesondere zu verstehen, dass die Regelvorrichtung insbesondere als Schieberelement ausgebildet ist, das zumindest eine oder eine Mehrzahl von Lamellen aufweist. Auf diese Weise kann die Temperatur des ersten Mediums, insbesondere der Ladeluft und/oder des rückgeführten Abgases besonders vorteilhaft eingestellt und ungekühltes mit gekühltem ersten Medium besonders vorteilhaft vermischt werden.

Ferner kann vorgesehen sein, dass das zumindest eine Verschlusselement lamellenartig ausgebildet ist und/oder eine Verschlusselementbreite aufweist, die einem Abstand zwischen zwei benachbart angeordneten dritten Strömungskanälen entspricht. Mit "lamellenartig" ist gemeint, dass das Verschlusselement zumindest eine Lamelle, insbesondere eine Mehrzahl von Lamellen, aufweist. Das Verschlusselement, insbesondere die zumindest eine Lamelle, weist eine Verschlusselementbreite auf, die dem Abstand zwischen zwei benachbart angeordneten dritten Strömungskanälen entspricht. Auf diese Weise kann der zumindest eine erste Strömungskanal und/oder der zumindest eine zweite Strömungskanal zumindest bereichsweise besonders vorteilhaft verschlossen werden.

Weiterhin kann vorgesehen sein, dass benachbarte Verschlusselemente in dem Abstand, insbesondere dem Abstand zwischen zwei benachbart angeordneten dritten Strömungskanälen, zueinander angeordnet und/oder mittels zumindest eines Verschlussverbindungselements miteinander verbunden sind.

In einer weiteren vorteilhaften Ausführung ist die Regelvorrichtung zuströmseitig oder abströmseitig des zumindest einen ersten Wärmetauschers angeordnet und/oder in den zumindest einen ersten Wärmetauscher integriert.

Ferner kann vorgesehen sein, dass die dritten Strömungskanäle flachrohrartig und/oder scheiben- bzw. plattenartig ausgebildet sind. Unter "flachrohrartig" ist insbesondere gemeint, dass die Strömungskanäle eine langlochartige Querschnittsfläche aufweisen, und/oder aus einer Mehrzahl parallel angeordneter Einzelkanäle mit rundem und/oder rechteckigem Querschnitt ausgebildet sein können.

Erfindungsgemäß ist vorgesehen, dass der zumindest eine erste Strömungskanal und der zumindest eine zweite Strömungskanal zwischen benachbarten dritten Strömungskanälen und im Wesentlichen senkrecht zu den dritten Strömungskanälen angeordnet sind. Auf diese Weise wird ein erstes Medium, welches durch die ersten Strömungskanäle strömt, besonders vorteilhaft gekühlt und/oder erstes Medium, welches durch die zweiten Strömungskanäle strömt, wird besonders vorteilhaft nicht gekühlt,

In einer erfindungsgemäßen Ausführung sind zwischen benachbarten dritten Strömungskanälen, insbesondere Rohren, abwechselnd erste Strömungskanäle und zweite Strömungskanäle angeordnet. Durch die abwechselnde Anordnung von einem ersten Strömungskanal, gefolgt von einem dritten Strömungskanal, wiederum gefolgt von einem zweiten Strömungskanal wiederum gefolgt von einem dritten Strömungskanal usw. kann besonders vorteilhaft eine Vermischung zwischen erstem ungekühlten und erstem gekühlten Medium, insbesondere Ladeluft und/oder Abgas, erfolgen.

In einer weiteren vorteilhaften Ausführung ist in dem zumindest einen ersten Strömungskanal zumindest ein Rippenelement, insbesondere zumindest eine Wellrippe zur Kühlleistungssteigerung, angeordnet und/oder mit zumindest einem dritten Strömungskanal verbunden. Auf diese Weise kann insbesondere erstes Medium, weiches insbesondere durch den zumindest einen ersten Strömungskanal strömt, besonders vorteilhaft gekühlt werden. Dadurch, dass zumindest ein Rippenelement mit dem dritten Strömungskanal, insbesondere durch Löten, Schweißen, Kleben usw., verbunden ist, kann die Wärme besonders vorteilhaft von dem zumindest einen ersten Strömungskanal über die Rippen auf die dritten Strömungskanäle, insbesondere die Rohre, übertragen werden.

Weiterhin kann besonders bevorzugt vorgesehen werden, dass das Gehäuse als Ansaugrohr für eine Motoreinheit eines Verbrennungsmotors ausgebildet ist. Auf diese Weise kann die Vorrichtung besonders bauraumoptimal in das Ansaugrohr integriert werden und eine Aufwärmung des ersten Mediums, insbesondere der Ladeluft und/oder des rückgeführten und gekühlten Abgases, besonders vorteilhaft verhindert werden.

Weiterhin kann vorgesehen sein, dass der zumindest eine erste Wärmetauscher ein Verdampfer für einen Kältemittelkreislauf ist. Auf diese Weise kann insbesondere der vorhandene Kältemittelkreislauf einer Klimaanlage besonders vorteilhaft zur Kühlung der Ladeluft mittels des zumindest einen ersten Wärmetauschers genutzt werden.

In einer vorteilhaften Weiterbildung ist zumindest eine Drosselklappe zuströmseitig und/oder abströmseitig des zumindest einen ersten Wärmetauschers angeordnet.

Ferner kann vorgesehen sein, dass eine Einspeisungsvorrichtung zur Einspeisung von rückgeführtem und/oder gekühltem Abgas eines Verbrennungsmotors in das erste Medium zuströmseitig und/oder abströmseitig des zumindest einen ersten Wärmetauschers angeordnet ist Auf diese Weise kann rückgeführtes und/oder gekühltes Abgas besonders vorteilhaft der Ladeluft und/oder dem Verbrennungsmotor zugeführt werden.

In einer weiteren vorteilhaften Ausgestaltung ist die Einspeisungsvorrichtung flachrohrartig ausgebildet und/oder weist die Einspeisungsvorrichtung zumindest eine Einspeisungsöffnung zur Einspeisung von insbesondere rückgeführtem und/oder gekühltem Abgas auf. Auf diese Weise kann rückgeführtes und/oder gekühltes Abgas besonders vorteilhaft in das erste Medium, insbesondere die Ladeluft, eingespeist bzw. mit der Ladeluft besonders vorteilhaft vermischt werden.

Auf diese Weise kann rückgeführtes und/oder gekühltes Abgas besonders vorteilhaft sowohl gekühltem ersten Medium, insbesondere Ladeluft, als auch ungekühltem ersten Medium, insbesondere Ladeluft, zugeführt und besonders vorteilhaft mit diesem vermischt werden.

Weiterhin kann besonders bevorzugt vorgesehen werden, dass eine Mischungsvorrichtung zur Durchmischung von gekühltem ersten Medium mit ungekühltem ersten Medium und/oder mit insbesondere rückgeführtem und/oder gekühltem Abgas abströmseitig des zumindest einen ersten Wärmetauschers und/oder der zumindest einen Einspeisungsvorrichtung angeordnet ist. Auf diese Weise kann eine Temperatursträhnigkeit zwischen ungekühltem ersten Medium einerseits und/oder eine Stoffsträhnigkeit, insbesondere von Ladeluft und/oder rückgeführtem Abgas, andererseits und gekühltem ersten Medium besonders vorteilhaft verhindert bzw. unterbunden werden.

Ferner wird ein System mit einer Vorrichtung zur Ladeluftkühlung für einen Verbrennungsmotor eines Kraftfahrzeugs nach einem der Ansprüche 1 bis 17 vorgeschlagen, welches zumindest einen Verbrennungsmotor, zumindest einen Kältemittelkreislauf mit zumindest einem zweiten Wärmetauscher, insbesondere mit einem Verdampfer für eine Klimaanlage, zumindest einen dritten Wärmetauscher zur Ladeluftvorkühlung, zumindest einen Turbolader zur Aufladung der Ladeluft, zumindest einen vierten Wärmetauscher, insbesondere einen Kondensator für eine Klimaanlage und zumindest eine Ventilvorrichtung, insbesondere ein Expansionsventil, aufweist.

Weiterhin kann vorgesehen sein, dass das System zumindest einen Kühlmittelkreislauf zur indirekten Ladeluftkühlung aufweist, wobei der Kühlmittelkreislauf den dritten Wärmetauscher zur Ladeluftvorkühlung und zumindest einen fünften Wärmetauscher zur Kühlung des Kühlmittels mittels Umgebungsluft aufweist.

In einer weiteren vorteilhaften Ausgestaltung weist das System zumindest einen sechsten Wärmetauscher zur Abgaskühlung von rückgeführtem Abgas für die Einspeisungsvorrichtung auf. Auf diese Weise kann rückgeführtes und gekühltes Abgas besonders vorteilhaft mittels der Einspeisungsvorrichtung dem ersten Medium, insbesondere der Ladeluft, zugeführt werden.

Weitere vorteilhafte Ausgestaltungen der Erfindung ergeben sich aus den Unteransprüchen und aus der Zeichnung.

Die Gegenstände der Unteransprüche beziehen sich sowohl auf die erfindungsgemäße Vorrichtung zur Ladeluftkühlung für einen Verbrennungsmotor eines Kraftfahrzeugs als auch auf das erfindungsgemäße System.

Ausführungsbeispiele der Erfindung sind in der Zeichnung dargestellt und werden im Folgenden näher erläutert, wobei eine Beschränkung der Erfindung hierdurch nicht erfolgen soll. Es zeigen
- Figur 1:: eine Schnittdarstellung durch einen in den Ansaugstutzen integrierten Ladeluftkühler mit einer lamellenschieberartig ausgebildeten Regelvorrichtung,
- Figur 2:: eine Vorderansicht einer lamellenschieberartig ausgebildeten Regelvorrichtung,
- Figur 3:: eine Schnittdarstellung A-A durch einen Ladeluftkühler mit einer lamellenschieberartig ausgebildeten Regelvorrichtung,
- Figur 4:: ein erstes Ausführungsbeispiel eines Systems zur Ladeluftkühlung und
- Figur 5:: ein zweites Ausführungsbeispiel eines Systems zur Ladeluftkühlung.

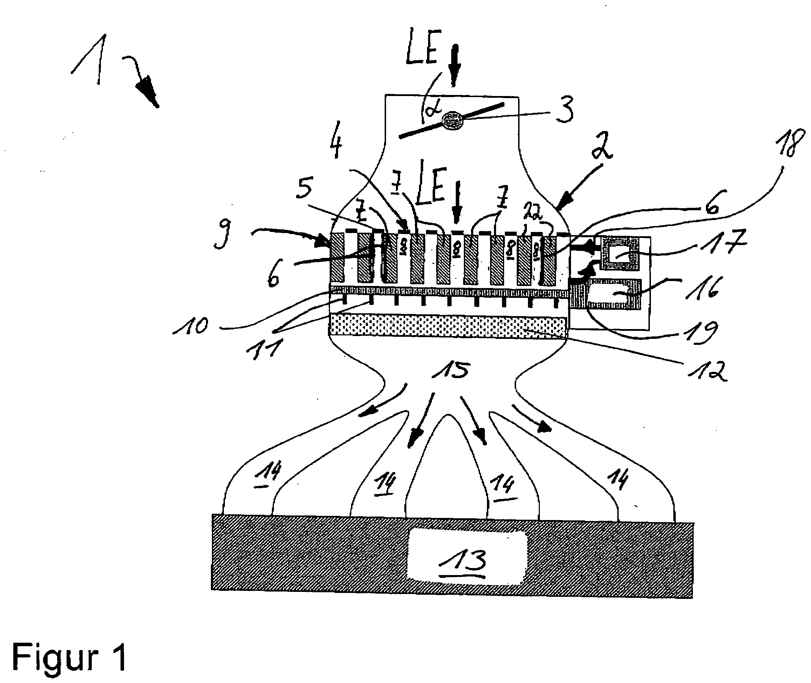

**Figur 1** zeigt eine Schnittdarstellung durch einen in das Ansaugrohr 2 integrierten Ladeluftkühler 9 mit einer lamellenschieberartig ausgebildeten Regelvorrichtung 4.

Die Vorrichtung 1 zur Ladeluftkühlung weist ein Gehäuse 2, insbesondere ein Ansaugrohr, auf, in dem zumindest ein erster Wärmetauscher 9, insbesondere ein Verdampfer, angeordnet ist. Der Verdampfer weist eine Anzahl von dritten Strömungskanälen auf, die als Rohre 6 ausgebildet sind. Die Rohre 6 sind im dargestellten Ausführungsbeispiel als Flachrohre ausgebildet. Sie weisen einen im Wesentlichen langlochartigen Querschnitt auf. In einem anderen nicht dargestellten Ausführungsbeispiel sind die Stege in eine Mehrzahl von Einzelkanäle unterteilt.

In einem anderen Ausführungsbeispiel weisen die Rohre 6 einen runden, ellipsenförmigen, sternförmigen, dreieckförmigen, viereckförmigen oder vieleckförmigen Querschnitt oder einen Querschnitt mit einer Kombination aus den zuvor genannten Formen auf. Die Rohre 6 sind im dargestellten Ausführungsbeispiel aus einem Metall, insbesondere aus Aluminium oder aus Edelstahl, ausgebildet. In einem anderen Ausführungsbeispiel sind die Rohre 6 aus einem wärmeleitfähigen Material und/oder aus Keramik und/oder aus Kunststoff und/oder aus einem Faserverbundwerkstoff ausgebildet. Der erste Wärmetauscher 9 ist im dargestellten Ausführungsbeispiel als Verdampfer ausgebildet. In einem anderen Ausführungsbeispiel kann der erste Wärmetauscher 9 als Verdampfer eines Kältemittelkreislaufs für eine Klimaanlage und/oder als Kondensator einer Klimaanlage und/oder als Ölkühler und/oder als Getriebeölkühler und/oder als Lenkölkühler und/oder als Abgaskühler und/oder als Ladeluftkühler und/oder als Kühlmittelkühler und/oder als Gaskühler für eine Klimaanlage, die insbesondere mit CO₂ betrieben wird, ausgebildet sein.

Der erste Wärmetauscher 9, insbesondere der Verdampfer, weist zumindest einen Sammelkasten auf. Im dargestellten Ausführungsbeispiel weist der erste Wärmetauscher 9 zwei Sammelkästen auf, in die die Rohre 6 eingeschoben bzw. mit denen die Rohre 6 verbunden, insbesondere durch Löten, Schweißen, Kleben usw., sind. Die nicht dargestellten Sammelkästen sind beispielsweise aus Kunststoff oder aus einem Metall wie beispielsweise Aluminium oder Stahl oder Edelstahl ausgebildet. Ferner können die Sammelkästen auch aus einem Faserverbundwerkstoff oder aus Keramik ausgebildet sein. In den nicht dargestellten Sammelkästen wird das Kältemittel und/oder das Kühlmittel, welches durch die Rohre 6 strömt, gesammelt bzw. auf die Rohre 6 verteilt.

Im dargestellten Ausführungsbeispiel weist der erste Wärmetauscher 9 neun Rohre 6, insbesondere Flachrohre, auf. In einem anderen Ausführungsbeispiel weist der Wärmetauscher 9 ein bis neun oder mehr als neun Rohre 6, insbesondere Flachrohre, auf.

Zwischen den Rohren 6, insbesondere den Flachrohren, insbesondere zwischen zwei benachbarten Rohren 6 sind erste Strömungskanäle 7 oder zweite Strömungskanäle 8 angeordnet. Im dargestellten Ausführungsbeispiel sind zwischen den Rohren 6 abwechselnd ein erster Strömungskanal 7, gefolgt von einem zweiten Strömungskanal 8 zwischen dem nächsten Rohrpaar von Rohren 6 angeordnet. Die Reihenfolge kann aber auch umgekehrt sein, so dass ein zweiter Strömungskanal 8 einem ersten Strömungskanal 7 folgt oder umgekehrt.

In einem anderen Ausführungsbeispiel können nacheinander ein oder zwei oder drei oder vier oder fünf oder sechs usw. erste Strömungskanäle 7 angeordnet und von einem oder zwei oder drei oder vier oder fünf oder sechs usw, zweiten Strömungskanälen 8 gefolgt werden oder umgekehrt. Die ersten und/oder zweiten Strömungskanäle sind jeweils durch ein oder mehrere Rohre 6 voneinander beabstandet.

In Lufteinströmungsrichtung LE gesehen, strömt die noch ungekühlte oder die bereits vorgekühlte Ladeluft zunächst an einer Drosselklappe 3 vorbei. Die Drosselklappe 3 dient der Drosselung des Ladeluftstroms. Die Drosselklappe 3 ist stufenlos verstellbar und weist zur Lufteinströmungsrichtung LE einen Drosselklappenwinkel α auf. Der Drosselklappenwinkel α kann Werte zwischen 0° und 360° annehmen. Nimmt die Drosselklappe einen Winkel α = 0° oder α = 180° ein, so ist der Widerstand für die einströmende Luft am geringsten. Nimmt die Drosselklappe 3 einen Winkel α = 90° oder einen Winkel α = 270° an, so ist der Widerstand für die einströmende Luft am größten. Insbesondere bei Ottomotoren ist eine Drosselklappe 3 erforderlich. Bei Dieselmotoren ist eine Drosselklappe 3 nicht unbedingt erforderlich. Die Drosselklappe kann in einem anderen Ausführungsbeispiel auch, in Luftströmungsrichtung LE gesehen, nach der Regelvorrichtung 4 und/oder nach dem ersten Wärmetauscher 9 und/oder nach der Einspeisungsvorrichtung 10 und/oder nach der Mischungsvorrichtung 12 angeordnet sein. In einem anderen Ausführungsbeispiel sind mehr als eine Drosselklappe 3 in der Vorrichtung 1 angeordnet.

In Luftströmungsrichtung LE gesehen, vor dem ersten Wärmetauscher, insbesondere dem Verdampfer, ist eine Regelvorrichtung 4 angeordnet. Im dargestellten Ausführungsbeispiel ist die Regelvorrichtung 4 als Lamellenschieber 4 ausgebildet. Die Regelvorrichtung, insbesondere der Lamellenschieber, weist eine Mehrzahl von Verschlusselementen 5 auf. Die Verschlusselemente 5 sind beispielsweise als Lamellen ausgebildet. Die Lamellen weisen eine im Wesentlichen rechteckförmige Form auf. In einem anderen Ausführungsbeispiel können die Verschlusselemente, insbesondere die Lamellen, eine runde und/oder ellipsenförmige und/oder dreieckförmige und/oder viereckige und/oder vieleckförmige oder eine Form aus der Kombination der zuvor genannten Formen aufweisen. Im dargestellten Ausführungsbeispiel nimmt die Regelvorrichtung, insbesondere der Lamellenschieber, eine Position ein, in der die zweiten Strömungskanäle 8 verschlossen sind, so dass erstes Medium, insbesondere Ladeluft, ausschließlich durch die ersten Strömungskanäle 7 hindurchtreten kann und dabei abgekühlt wird. In einer weiteren Position, die im dargestellten Ausführungsbeispiel in Figur 1 nicht dargestellt ist, verschließen die Verschlusselemente 5 ausschließlich die ersten Strömungskanäle 7, so dass erstes Medium, insbesondere Ladeluft, ausschließlich durch die zweiten Strömungskanäle 8 strömt und dabei im Wesentlichen kaum gekühlt wird. Ferner kann die Regelvorrichtung in einer anderen ebenfalls nicht dargestellten Position die ersten Strömungskanäle 7 und die zweiten Strömungskanäle 8 zumindest abschnittsweise verschließen, so dass erstes Medium, insbesondere, Ladeluft sowohl durch die ersten Strömungskanäle 7 als auch durch die zweiten Strömungskanäle 8 hindurchströmt, wobei der Anteil des ersten Mediums, der durch die ersten Strömungskanäle 7 strömt, gekühlt wird und der Anteil des ersten Mediums, der durch die zweiten Strömungskanäle 8 strömt, im Wesentlichen nicht gekühlt wird.

in einem anderen Ausführungsbeispiel ist die Regelvorrichtung, insbesondere der Lamellenschieber in Lufteinströmungsrichtung LE gesehen, nach dem ersten Wärmetauscher 9, insbesondere nach dem Verdampfer angeordnet. In einem anderen Ausführungsbeispiel ist die Regelvorrichtung 4, insbesondere der Lamellenschieber, im ersten Wärmetauscher 9, insbesondere im Verdampfer, angeordnet bzw. einteilig mit diesem ausgebildet bzw. in den ersten Wärmetauscher 9, insbesondere den Verdampfer, integriert. Benachbart zu dem ersten Wärmetauscher 9, insbesondere dem Verdampfer, ist ein Expansionsventil 17 angeordnet. Das Expansionsventil 17 ist mit einem nicht weiter dargestellten Kältemittelkreislauf verbunden. Aus dem Expansionsventil 17 führt eine Kältemitteleintrittsleitung 18 in einen nicht dargestellten Sammelkasten des ersten Wärmetauschers, des Verdampfers, 9. Eine Kältemittelaustrittsleitung 19 führt aus einem nicht dargestellten Sammelkasten des ersten Wärmetauschers 9 zu dem Expansionsventil 17. Das Expansionsventil 17 kann als thermostatisches Expansionsventil und/oder als Orifice ausgebildet sein. Das Kältemittel kommt mit erhöhtem Druck vor dem Expansionsventil 17 an. Im Expansionsventil 17 wird der Druck des Kältemittels, insbesondere R734a oder CO₂ oder der Druck eines anderen Kältemittels, verringert und das Kältemittel strömt mit dem geringeren Druck in den ersten Wärmetauscher 9, insbesondere den Verdampfer, ein. Bei der Expansion des Kältemittels nach Durchströmen des Expansionsventils 17 verringert sich aufgrund des geringeren Drucks und des Zusammenhangs zwischen Druck und Temperatur die Temperatur des Kältemittels.

In Lufteinströmungsrichtung LE gesehen, nach dem ersten Wärmetauscher 9 ist eine Einspeisungsvorrichtung 10 angeordnet. In der Einspeisungsvorrichtung 10 wird rückgeführtes und/oder im Abgaswärmetauscher 16 gekühltes rückgeführtes Abgas über Einspeisungsöffnungen 11 in Einspeisungsrohren rückgeführtes und/oder gekühltes Abgas dem ersten Medium, insbesondere der Ladeluft, zugeführt. Im dargestellten Ausführungsbeispiel weist die Einspeisungsvorrichtung 10 neun Einspeisungsöffnungen 11 und/oder Einspeisungsrohre auf. In einem anderen Ausführungsbeispiel weist die Einspeisungsvorrichtung 10 ein bis neun oder mehr als neun Einspeisungsöffnungen 11 und/oder Einspeisungsrohre auf.

In einem anderen Ausführungsbeispiel ist die Einspeisungsvorrichtung 10, in Lufteinströmungsrichtung LE gesehen, vor dem ersten Wärmetauscher 9 oder im ersten Wärmetauscher 9 angeordnet. In einem anderen Ausführungsbeispiel ist die Einspeisungsvorrichtung 10 einteilig mit dem ersten Wärmetauscher 9, insbesondere dem Verdampfer, ausgebildet bzw. in diesem integriert.

Der erste Wärmetauscher 9, insbesondere der Verdampfer, vorzugsweise als segmentierter Verdampfer ausgebildet. Der Abgaswärmetauscher ist im dargestellten Ausführungsbeispiel als Niedertemperaturabgaswärmetauscher ausgebildet. In einem anderen Ausführungsbeispiel kann der Abgaswärmetauscher als direkter Abgaskühler ausgebildet sein. In einem weiteren Ausführungsbeispiel kann der Abgaskühler als indirekter Abgaskühler ausgebildet sein. Der zumindest eine Abgaskühler 16 kann auf der Niederdruckseite einer nicht dargestellten Turbine zumindest eines Turboladers angeordnet sein. In einem anderen Ausführungsbeispiel kann der Abgaswärmetauscher 16 auf der Hochdruckseite einer Turbine eines nicht dargestellten Turboladers angeordnet sein.

Im dargestellten Ausführungsbeispiel ist in Lufteinströmungsrichtung LE nach der Einspeisungsvorrichtung 10 gesehen eine Mischungsvorrichtung 12 angeordnet. Im dargestellten Ausführungsbeispiel ist die Mischungsvorrichtung 12 als Statik-Mischer ausgebildet. Die Mischungsvorrichtung 12 ist im Wesentlichen als Gitter ausgebildet, welches ungekühltes erstes Medium, Ladeluft, und/oder gekühltes erstes Medium, Ladeluft, und/oder zugeführtes gekühltes Abgas miteinander vermischen. Der Statikmischer ist im dargestellten Ausführungsbeispiel aus einem Metalldraht, insbesondere aus Aluminium, Stahl oder Edelstahl oder aus Kunststoff oder aus einem Keramikwerkstoff und/oder aus einem Faserverbundwerkstoff ausgebildet. Die Mischungsvorrichtung 12 weist nicht weiter dargestellte turbulenzerzeugende Elemente wie beispielsweise Drahtgitter oder Ausprägungen auf. Die Mischungsvorrichtung 12 ist insbesondere eines urformenden Fertigungsverfahrens wie beispielsweise Gießen, insbesondere Spritzgießen, oder mittels eines abtragenden Fertigungsverfahrens, wie beispielsweise Lasern oder Erodieren, oder mittels eines umformenden Fertigungsverfahrens, wie beispielsweise mittels Stanzens, Prägens oder Lochens, hergestellt. In einem anderen Ausführungsbeispiel ist die Mischungsvorrichtung 12, in Strömungsrichtung LE gesehen, vor der Einspeisungsvorrichtung 10 angeordnet. In einem anderen Ausführungsbeispiel ist die Mischungsvorrichtung 12 einteilig mit dem ersten Wärmetauscher 9, insbesondere dem Verdampfer und/oder einteilig mit der Einspeisungsvorrichtung 10 und/oder einteilig mit der Regelvorrichtung 4 ausgebildet.

Nach dem Durchströmen der Mischungsvorrichtung 12 wird die gekühlte und/oder mit rückgeführtem gekühltem Abgas versehene Ladeluft in der Luftverteilkammer 15 auf die Luftzuführkanäle 14, welche zum Motor 13 führen, aufgeteilt. Im dargestellten Ausführungsbeispiel weist der Motor 13 vier Luftzuführkanäle 14 auf. In einem anderen Ausführungsbeispiel weist der Motor 13 ein bis vier oder fünf, sechs, sieben, acht oder mehr als acht Luftzuführkanäle 14 auf.

Die Einspeisungsvorrichtung 10 ist im dargestellten Ausführungsbeispiel im Wesentlichen als Flachrohr ausgebildet. In einem anderen Ausführungsbeispiel weist die Einspeisungsvorrichtung 10 eine runde und/oder ellipsenförmige und/oder dreieckförmige und/oder viereckförmige und/oder eine Kombination der zuvor genannten Formen auf. Im dargestellten Ausführungsbeispiel ist die Einspeisungsvorrichtung 10 aus Metall, insbesondere aus Aluminium oder aus Edelstahl ausgebildet. In einem anderen Ausführungsbeispiel ist die Einspeisungsvorrichtung 10 aus Kunststoff und/oder aus Keramik und/oder aus einem Faserverbundwerkstoff ausgebildet.

Die Mischungsvorrichtung 12 kann in einem anderen nicht dargestellten Ausführungsbeispiel ebenso eine Filtereinheit aufweisen.

Im dargestellten Ausführungsbeispiel sind die Regelvorrichtung 4 und/oder die Einspeisungsvorrichtung 10 und/oder die Mischungsvorrichtung 12 im Wesentlichen senkrecht zur Lufteinströmungseinrichtung LE angeordnet. In einem anderen Ausführungsbeispiel schließen die Regelungsvorrichtung 4 und/oder die Einspeisungsvorrichtung 11 und/oder die Mischungsvorrichtung 12 einen nicht dargestellten Winkel von 0° bis 360°, insbesondere zwischen 0° und 270°, insbesondere zwischen 0° und 180°, insbesondere zwischen 0° und 100°, insbesondere zwischen 20° und 95°, insbesondere zwischen 30° und 90° ein.

Das Gehäuse 2, insbesondere das Ansaugrohr, ist im dargestellten Ausführungsbeispiel aus Metall, insbesondere aus Edelstahl, Stahl oder hitzebeständigem Aluminium oder aus einem hitzebeständigen Kunststoff oder aus Keramik oder aus einem Faserverbundwerkstoff ausgebildet.

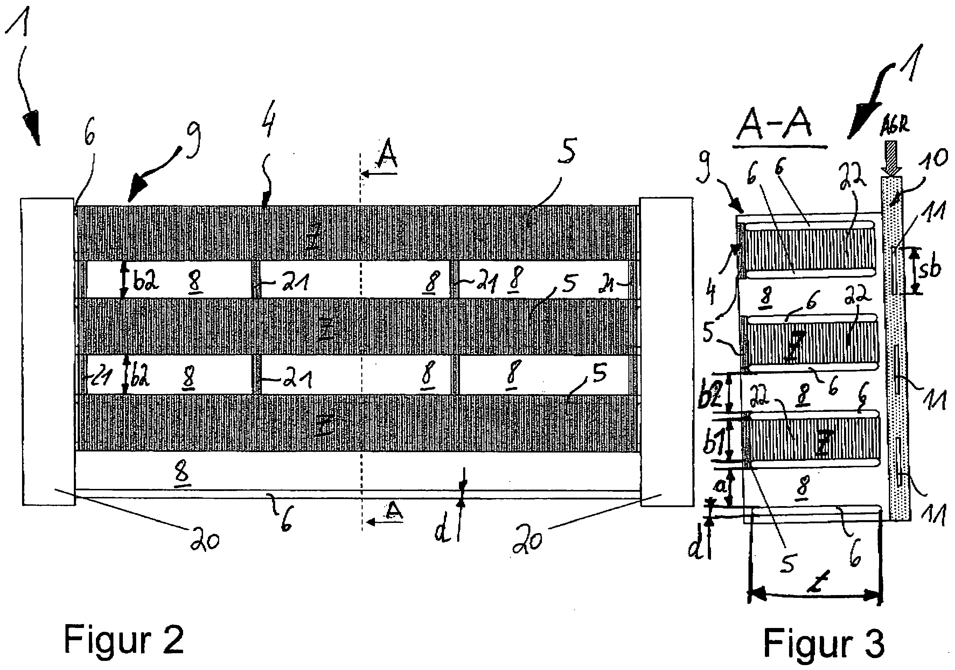

**Figur 2** zeigt eine Vorderansicht einer lamellenschieberartig ausgebildeten Regelvorrichtung 4 sowie die Vorrichtung zur Ladeluftkühlung 1 und den ersten Wärmetauscher 9. Gleiche Merkmale sind mit den gleichen Bezugszeichen versehen wie in Figur 1.

In Figur 2 ist ein Ausschnitt der Vorrichtung 1 zur Ladeluftkühlung dargestellt. Die Vorrichtung 1 zur Ladeluftkühlung umfasst einen ersten Wärmetauscher 9, insbesondere einen Verdampfer, mit 2 Sammelkästen 20. Sieben Rohre 6, insbesondere Flachrohre, verbinden die beiden Sammelkästen 20. Die Rohre 6, insbesondere die Flachrohre, sind mit den Sammelkästen mittels Stoffschluss, insbesondere durch Löten, Schweißen, Kleben usw., und/oder mittels Formschluss, insbesondere durch Verkrimpen oder Umbiegen, mit den Sammelkästen 20 verbunden. In den Rohren 6 strömt ein Kältemittel, insbesondere R134a oder CO₂ oder ein anderes Kältemittel. Im dargestellten Ausführungsbeispiel verschließt die Regelvorrichtung 4, insbesondere der Lamellenschieber, mit seinen Verschlusselementen 5, insbesondere mit seinen Lamellen, die ersten Strömungskanäle 7. Die zweiten Strömungskanäle 8 sind freigegeben.

Die Verschlusselemente 5, insbesondere die Lamellen, sind über Verschlussverbindungselemente 21, miteinander verbunden. In einem anderen Ausführungsbeispiel sind die Verschlusselemente 5 und die Verschlussverbindungselemente 21 einteilig ausgebildet. Benachbarte Verschlusselemente 5, insbesondere Lamellen, weisen einen Abstand b2 zueinander auf. Der Abstand b2 kann Werte zwischen 0 mm und 20 mm, insbesondere zwischen 0 mm und 15 mm, insbesondere zwischen 0 mm und 12 mm, insbesondere zwischen 2 mm und 10 mm, insbesondere zwischen 5 mm und 8 mm, annehmen. Im dargestellten Ausführungsbeispiel sind die Verschlussverbindungselemente 21 im Wesentlichen parallel zu den Sammelkästen 20 ausgebildet. In einem anderen Ausführungsbeispiel sind die Verschlussverbindungselemente 21 unter einem Winkel zwischen 0° und 360°, insbesondere zwischen 0° und 180°, insbesondere zwischen 5° und 100°, insbesondere zwischen 5° und 90°, insbesondere zwischen 5° und 70°, zueinander ausgebildet.

Die Verschlusselemente 5, insbesondere die Lamellen, sind im dargestellten Ausführungsbeispiel im Wesentlichen rechtwinklig zu den Verschlussverbindungselementen 21 und/oder zu den Sammelkästen 20 angeordnet. In einem anderen Ausführungsbeispiel sind die Verschlusselemente 5, insbesondere die Lamellen, unter einem nicht dargestellten Winkel zwischen 0° und 90°, insbesondere zwischen 0° und 80°, insbesondere zwischen 0° und 70°, zu den Verschlussverbindungselementen 21 und/oder zu den Sammelkästen 20 ausgebildet.

Die Rohre 6 sind im Wesentlichen senkrecht zu den Sammelkästen 20 angeordnet.

Die Verschlusselemente 5, insbesondere die Lamellen, sind insbesondere streifenförmig ausgebildet. Jede Lamelle 5 ist so breit, dass sie den ersten Strömungskanal 7 oder den zweiten Strömungskanal 8 vollständig abdeckt. Alle Verschlusselemente 5, insbesondere alle Lamellen, sind quer zum ersten Wärmetauscher, insbesondere zum Verdampfer, um mindestens die Breite b2+d bzw. um die Breite b1+d bzw. um die Breite a+d verschiebbar.

**Figur 3** zeigt eine Schnittdarstellung A-A durch die Vorrichtung 1 bzw. durch den Ladeluftkühler 9 und die lamellenschieberartig ausgebildete Regelvorrichtung 4. Gleiche Merkmale sind mit den gleichen Bezugszeichen versehen wie in den vorherigen Figuren.

Die Vorrichtung 1 in Figur 3 zeigt den ersten Wärmetauscher 9, insbesondere den Verdampfer mit den Rohren 6, insbesondere den Flachrohren. Ferner ist die Einspeisungsvorrichtung 10 zur Einspeisung von rückgeführtem und/oder gekühltem Abgas AGR an dem ersten Wärmetauscher 9 angeordnet. Die Einspeisungsvorrichtung 10 weist Einspeisungsöffnungen 11 auf. Die Einspeisungsöffnungen 11 sind im Wesentlichen langlochförmig ausgebildet und weisen eine Schlitzbreite sb auf. Die Schlitzbreite sb nimmt Werte zwischen 0 mm und 20 mm, insbesondere Werte zwischen 0 mm und 15 mm, insbesondere Werte zwischen 1 mm und 10 mm, insbesondere Werte zwischen 1 mm und 8 mm an.

Zwischen den Flachrohren 6 sind abwechselnd Rippenelemente 22 angeordnet. Die Rippenelemente 22 sind insbesondere in den ersten Strömungskanälen 7 angeordnet. In einem anderen nicht dargestellten Ausführungsbeispiel sind die Rippenelemente 22 in den zweiten Strömungskanälen 8 angeordnet. Die Rippenelemente 22 sind mit den Flachrohren 6 stoffschlüssig, beispielsweise durch Löten, Schweißen, Kleben usw. verbunden. Die Rippenelemente 22 sind aus Metall, insbesondere aus Aluminium, ausgebildet. Die Rippenelemente 22 weisen eine Anzahl von nicht dargestellten Schlitzen auf. Insbesondere sind die Rippenelemente 22 als Wellrippen ausgebildet. Die Rohre 6, insbesondere die Flachrohre, weisen eine Tiefe t auf. Die Tiefe t nimmt Werte von 10 mm bis 200 mm, insbesondere Werte zwischen 10 mm und 100 mm, insbesondere Werte zwischen 10 mm und 60 mm, insbesondere Werte zwischen 20 mm und 60 mm an.

Die Flachrohre 6 weisen eine Dicke d auf. Die Dicke d nimmt Werte zwischen 0 mm und 5 mm, insbesondere Werte zwischen 0 mm und 4 mm, insbesondere Werte zwischen 0,1 mm und 3 mm, insbesondere Werte zwischen 0,1 mm und 2,8 mm an.

Die Einspeisungsöffnungen 11 sind im Wesentlichen senkrecht zu den Rohren 6 angeordnet. Die Einspeisungsöffnungen 11 sind im Wesentlichen derart angeordnet, dass bei Verlängerung der Flachrohre 6 in Richtung der Tiefe t die Einspeisungsöffnung in zwei Teile aufgeteilt wird, die im Wesentlichen den gleichen Flächeninhalt aufweisen.

Benachbarte Flachrohre weisen einen Abstand a zueinander auf. Der Abstand a nimmt Werte zwischen 0 mm und 15 mm, insbesondere Werte zwischen 5 mm und 15 mm, insbesondere Werte zwischen 5 mm und 12 mm, insbesondere Werte zwischen 5 mm und 10 mm, insbesondere Werte zwischen 5 mm und 8 mm an. Im dargestellten Ausführungsbeispiel nimmt die Breite des ersten Strömungskanals b1 und/oder die Breite des zweiten Strömungskanals b2 dieselben Werte an wie der Abstand a zwischen zwei benachbarten Rohren 6. In einem anderen Ausführungsbeispiel ist der Abstand a kleiner als die Breite b1 und/oder die Breite b2. In einem anderen Ausführungsbeispiel ist der Abstand a größer als die Breite des ersten Strömungskanals b1 und/oder als die Breite des zweiten Strömungskanals b2.

In einem anderen Ausführungsbeispiel kann die Breite des ersten Strömungskanals b1 größer oder kleiner oder gleich der Breite des zweiten Strömungskanals b2 sein.

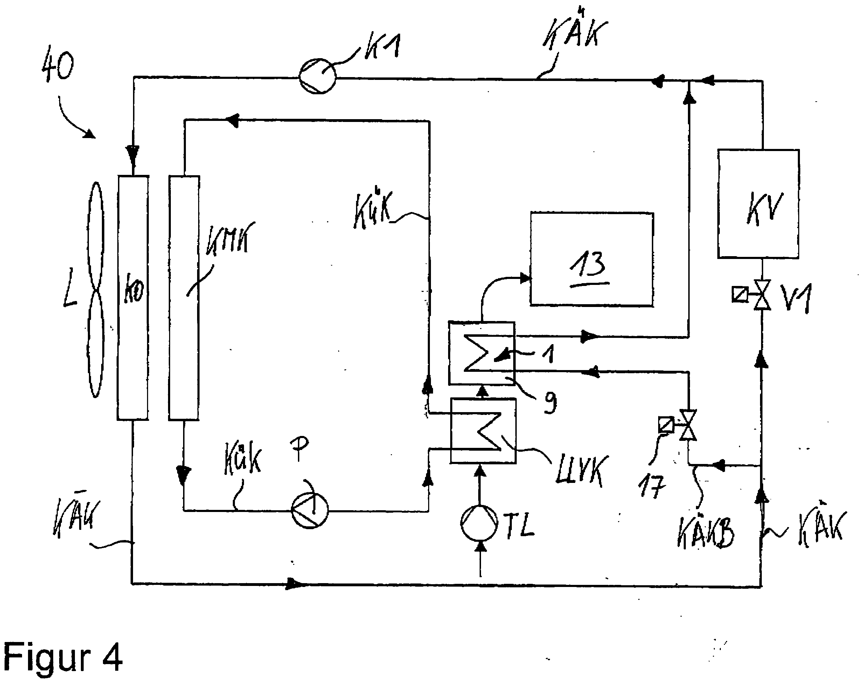

**Figur 4** zeigt ein erstes Ausführungsbeispiel eines Systems zur Ladeluftkühlung. Die gleichen Merkmale sind mit den gleichen Bezugszeichen versehen wie in den vorherigen Figuren.

Das System 40 zur Ladeluftkühlung weist einen Lüfter sowie einen Kondensator und einen Kühlmittelkühler auf. Der Lüfter L befördert Umgebungsluft durch den Kondensator KO und/oder durch den Kühlmittelkühler KMK. Im dargestellten Ausführungsbeispiel ist der Lüfter in Luftströmungsrichtung vor dem Kondensator KO und vor dem Kühlmittelkühler KMK angeordnet. In einem anderen Ausführungsbeispiel ist der Lüfter L hinter dem Kondensator KO und/oder hinter dem Kühlmittelkühler KMK angeordnet. Ferner weist das System 40 eine Kühlmittelpumpe P, einen ersten Kompressor K1 zum Komprimieren eines Kältemittels, insbesondere CO₂ oder R134a, auf. Darüber hinaus weist das System 40 zumindest einen Turbolader TL, einen Ladeluftvorkühler LLVK sowie eine Vorrichtung zur Ladeluftkühlung 9 mit einem ersten Wärmetauscher 9, insbesondere einem Verdampfer, auf. Das System 40 weist ferner einen Verbrennungsmotor 13 sowie ein Expansionsventil 17, einen Kältemittelverdampfer einer Klimaanlage KV und ein weiteres Expansionsventil V1 auf.

Von außen angesaugte Luft wird in den Turbolader TL komprimiert bzw. in einer weiteren nicht dargestellten Ausführung einer weiteren zweiten Verdichtung nach bereits dem ersten Durchlaufen einer Verdichtungsstufe weiter verdichtet. Dies führt zu einer Erhöhung der Temperatur der Ladeluft, weshalb die Ladeluft in einem Ladeluftvorkühler LLVK in einer ersten Stufe abgekühlt und in der Vorrichtung zur Ladeluftkühlung 1, insbesondere in dem ersten Wärmetauscher 9, insbesondere dem Verdampfer, weiter abgekühlt wird, bevor die Ladeluft dem Verbrennungsmotor 13 zugeführt wird.

Der Ladeluftvorkühler LLVK wird von einem Kühlmittel, insbesondere einem wasserhaltigen Kühlmittel, durchströmt. Das Kühlmittel strömt, nachdem es den Ladeluftvorkühler LLVK durchströmt hat, durch den Kühlmittelkühler KMK und weiter durch die Kühlmittelpumpe P wieder zum Ladeluftvorkühler LLVK. Die Pumpe P kann auch zwischen Ladeluftvorkühler LLVK und dem Kühlmittelkühler KMK angeordnet sein. Der Kühlmittelkreislauf KÜK weist den Kühlmittelkühler KMK, den Ladeluftvorkühler LLVK und die Kühlmittelpumpe P auf.

In dem Kältemittelkreislauf KÄK wird Kältemittel, insbesondere CO₂ oder R134a, in einem Kältemittelkompressor K1 auf ein höheres Druckniveau gebracht und durchströmt den Kondensator KO, wobei das Kältemittel von der Umgebungsluft abgekühlt wird. Nach dem Durchströmen des Kondensators strömt das Kältemittel weiter durch den Kältekreislauf KÄK, wobei ein Kältemittelkreislaufbypass KÄKB vom Kältemittelkreislauf KÄK abzweigt. Durch den Kältemittelbypass strömt Kältemittel durch ein Expansionsventil 17 in den ersten Wärmetauscher 9, insbesondere den Verdampfer, der Vorrichtung 1 zur Ladeluftkühlung und strömt anschließend wieder in den Kältemittelkreislauf KÄK. Der restliche Teil des Kältemittels strömt über ein weiteres Expansionsventil V1, wobei der Druck des Kältemittels verringert wird, in den Verdampfer einer Klimaanlage eines Kraftfahrzeugs.

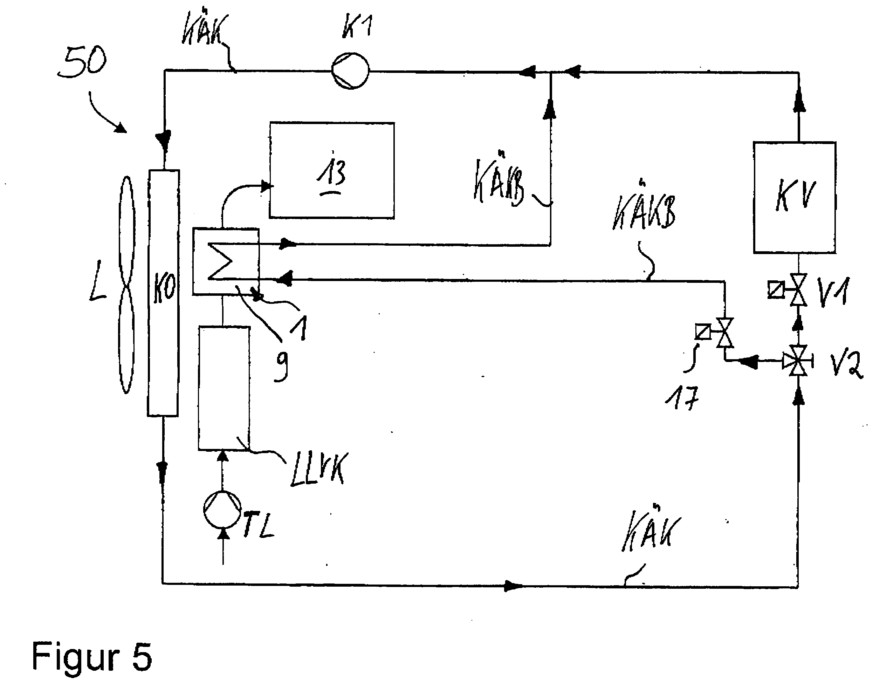

**Figur 5** zeigt ein zweites Ausführungsbeispiel eines Systems zur Ladeluftkühlung. Gleiche Merkmale sind mit den gleichen Bezugszeichen versehen wie in den vorherigen Figuren.

Das System 50 zur Ladeluftkühlung weist im Unterschied zum System, welches in Figur 4 dargestellt ist, ein weiteres Ventil V2 auf. Das Ventil V2 ist insbesondere als Bypassventil ausgebildet und regelt die Durchströmung des Kältemittelkreislaufbypasses KÄKB und/oder des Kältemittelkreislaufs KÄK. Insbesondere ermöglicht das Ventil V2 eine ausschließliche Durchströmung des Kältemittelkreislaufbypasses KÄKB und/oder des Kältemittelkreislaufs KÄK. Der Kühlmittelkreislauf KÜK ist im System 50 nicht dargestellt. Bei dem Ladeluft-Vorkühler LLVK handelt es sich in einem anderen Ausführungsbeispiel um einen direkten Ladeluftkühler handeln, der direkt von Umgebungsluft gekühlt und/oder von dieser beaufschlagt wird.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Vorrichtung zur Ladeluftkühlung für einen Verbrennungsmotor (13) eines Kraftfahrzeugs aufweisend zumindest einen ersten Wärmetauscher (9) zur Ladeluftkühlung mit zumindest einem ersten Strömungskanal (7) zur Durchströmung für einen ersten Teilstrom eines ersten Mediums, mit zumindest einem zweiten Strömungskanal (8) zur Durchströmung für einen zweiten Teilstrom des erstes Mediums sowie mit zumindest einem dritten Strömungskanal (6) zur Durchströmung für ein Kühl- und/oder Kältemittel, wobei der erste Strömungskanal (7) in thermischer Verbindung mit dem zumindest einen dritten Strömungskanal (6) steht und der zumindest eine zweite Strömungskanal thermisch isoliert ist, **dadurch gekennzeichnet, dass** zumindest eine Regelvorrichtung (4) zur Temperaturregelung und gleichmäßigen Temperaturdurchmischung der beiden Teilströme nach Durchströmen des ersten Wärmetauschers (9) vorgesehen ist, wobei der zumindest eine erste Strömungskanal (7) und der zumindest eine zweite Strömungskanal (8) zwischen benachbarten dritten Strömungskanälen (6) und im Wesentlichen senkrecht zu den dritten Strömungskanälen (6) angeordnet sind, wobei zwischen benachbarten dritten Strömungskanälen (6) abwechselnd erste Strömungskanäle (7) und zweite Strömungskanäle (8) angeordnet sind.

2. Vorrichtung nach Anspruch 1, **dadurch gekennzeichnet, dass** die Regelvorrichtung (4) zumindest ein Verschlusselement (5) zum zumindest bereichsweisen Verschließen des zumindest einen ersten Strömungskanals (7) und/oder des zumindest einen zweiten Strömungskanals (8) aufweist.

3. Vorrichtung nach einem der vorhergehenden Ansprüche, **dadurch gekennzeichnet, dass** die Regelvorrichtung (4) lamellenschieberartig ausgebildet ist.

4. Vorrichtung nach Anspruch 2 oder 3, **dadurch gekennzeichnet, dass** das zumindest eine Verschlusselement (5) lamellenartig ausgebildet ist.

5. Vorrichtung nach Anspruch 2, 3 oder 4, **dadurch gekennzeichnet, dass** das zumindest eine Verschlusselement (5) eine Verschlusselementbreite aufweist, die einem ersten Abstand (b1 +d, b2+d, a+d) zwischen zwei benachbart angeordneten dritten Strömungskanälen (6) entspricht.

6. Vorrichtung nach einem der Ansprüche 2 bis 5, **dadurch gekennzeichnet, dass** benachbarte Verschlusselemente (5) in einem zweiten Abstand (a, b1, b2) zueinander angeordnet sind.

7. Vorrichtung nach einem der Ansprüche 2 bis 6, **dadurch gekennzeichnet, dass** benachbarte Verschlusselemente (5) mittels zumindest eines Verschlussverbindungselements (21) miteinander verbunden sind.

8. Vorrichtung nach einem der vorhergehenden Ansprüche, **dadurch gekennzeichnet, dass** die Regelvorrichtung (4) zuströmseitig oder abströmseitig des zumindest einen ersten Wärmetauschers (9) angeordnet ist und/oder in den zumindest einen ersten Wärmetauscher (9) integriert ist.

9. Vorrichtung nach einem der vorhergehenden Ansprüche, **dadurch gekennzeichnet, dass** der zumindest eine Strömungskanal (6) flachrohrartig und/oder scheiben- bzw. plattenartig ausgebildet ist.

10. Vorrichtung nach einem der vorhergehenden Ansprüche, **dadurch gekennzeichnet, dass** in dem zumindest einen ersten Strömungskanal (7) zumindest ein Rippenelement (22), insbesondere zumindest eine Wellrippe zur Wärmeübertragungssteigerung, angeordnet und/oder mit zumindest einem dritten Strömungskanal (6) verbunden ist.

11. Vorrichtung nach einem der vorhergehenden Ansprüche, **dadurch gekennzeichnet, dass** zumindest ein Gehäuse (2) zur Aufnahme des zumindest einen ersten Wärmetauschers (9) als Ansaugrohr für eine Motoreinheit (13) ausgebildet ist.

12. Vorrichtung nach einem der vorhergehenden Ansprüche, **dadurch gekennzeichnet, dass** der zumindest eine erste Wärmetauscher (9) ein Verdampfer für einen Kältemittelkreislauf (KÄK, KÄKB) ist.

13. Vorrichtung nach einem der vorhergehenden Ansprüche, **dadurch gekennzeichnet, dass** zumindest eine zusätzliche Drosselklappe (3) zuströmseitig und/oder abströmseitig des zumindest einen ersten Wärmetauschers (9) angeordnet ist.

14. Vorrichtung nach einem der vorhergehenden Ansprüche, **dadurch gekennzeichnet, dass** eine Einspeisungsvorrichtung (10) zur Einspeisung von rückgeführtem und/oder gekühltem Abgas eines Verbrennungsmotors (13) in das erste Medium zuströmseitig und/oder abströmseitig des zumindest einen ersten Wärmetauschers (9) angeordnet ist.

15. Vorrichtung nach Anspruch 14, **dadurch gekennzeichnet, dass** die Einspeisungsvorrichtung (10) flachrohrartig ausgebildet ist und/oder zumindest eine Einspeisungsöffnung (11) zur Einspeisung von insbesondere rückgeführtem und/oder gekühltem Abgas ausweist.

16. Vorrichtung nach Anspruch 15, **dadurch gekennzeichnet, dass** die zumindest eine Einspeisungsöffnung (11) im Wesentlichen langlochartig ausgebildet ist und/oder im Wesentlichen senkrecht zu einer Ladeluftströmungsrichtung (LE) angeordnet ist.

17. Vorrichtung nach einem der vorhergehenden Ansprüche, **dadurch gekennzeichnet, dass** eine Mischungsvorrichtung (12) zur Durchmischung von gekühltem ersten Medium mit ungekühltem ersten Medium und/oder mit insbesondere rückgeführtem und/oder gekühltem Abgas abströmseitig des zumindest einen ersten Wärmetauschers (9) und/oder der zumindest einen Einspeisungsvorrichtung (10) angeordnet ist.

18. System mit einer Vorrichtung nach einem der vorhergehenden Ansprüche aufweisend zumindest einen Verbrennungsmotor (13), zumindest einen Kältemittelkreislauf (KÄK, KÄKB) mit zumindest einem zweiten Wärmetauscher (KV), insbesondere mit einem Verdampfer für eine Klimaanlage, zumindest einen dritten Wärmetauscher (LLVK) zur Ladeluftvorkühlung sowie zumindest einen Turbolader (TL) zur Aufladung der Ladeluft.

19. System nach Anspruch 18, **dadurch gekennzeichnet, dass** das System (40, 50) zumindest einen vierten Wärmetauscher (KO), insbesondere einen Kondensator für eine Klimaanlage und/oder zumindest eine Ventilvorrichtung (17, V1, V2), insbesondere ein Expansionsventil aufweist.

20. System nach Anspruch 18 oder 19, **dadurch gekennzeichnet, dass** das System (40, 50) zumindest einen Kühlmittelkreislauf (KÜK) zur indirekten Ladeluftkühlung aufweist, wobei in dem Kühlmittelkreislauf (KÜK) der dritte Wärmetauscher (LLVK) zur Ladeluftvorkühlung angeordnet ist und/oder das System (40, 50) zumindest einen fünften Wärmetauscher (KMK) zur Kühlung des Kühlmittels mittels Umgebungsluft aufweist.

21. System nach einem der Ansprüche 16 bis 18, **dadurch gekennzeichnet, dass** das System (40, 50) zumindest einen sechsten Wärmetauscher zur Abgaskühlung (16) für die Einspeisungsvorrichtung (10) aufweist.

## Claims

1. A device for charge-air cooling for an internal combustion engine (13) of a motor vehicle, having at least one first heat exchanger (9) for charge-air cooling with at least one first flow duct (7) for a throughflow of a first partial flow of a first medium, with at least one second flow duct (8) for a throughflow of a second partial flow of the first medium, and with at least one third flow duct (6) for a throughflow of a coolant and/or refrigerant, wherein the first flow duct (7) is thermally connected to the at least one third flow duct (6), and the at least one second flow duct is thermally insulated, **characterised in that** at least one regulating device (4) for temperature regulation and uniform temperature mixture of the two partial flows after flowing through the first heat exchanger (9) is provided, wherein the at least one first flow duct (7) and the at least one second flow duct (8) are arranged between adjacent third flow ducts (6) and substantially perpendicular to the third flow ducts (6), wherein first flow ducts (7) and second flow ducts (8) are arranged alternately between adjacent third flow ducts (6).

2. The device as claimed in claim 1, **characterised in that** the regulating device (4) has at least one closure element (5) for closing off the at least one first flow duct (7) and/or the at least one second flow duct (8) at least in regions.

3. The device as claimed in one of the preceding claims, **characterised in that** the regulating device (4) is designed in the manner of a lamella slide.

4. The device as claimed in claim 2 or 3, **characterised in that** the at least one closure element (5) is designed in the manner of a lamella.

5. The device as claimed in claim 2, 3 or 4, **characterised in that** the at least one closure element (5) has a closure element width which corresponds to a first spacing (b1+d, b2+d, a+d) between two adjacently arranged third flow ducts (6).

6. The device as claimed in one of claims 2 to 5, **characterised in that** adjacent closure elements (5) are arranged with a second spacing (a, b1, b2) to one another.

7. The device as claimed in one of claims 2 to 6, **characterised in that** adjacent closure elements (5) are connected to one another by means of at least one closure connecting element (21).

8. The device as claimed in one of the preceding claims, **characterised in that** the regulating device (4) is arranged at the inflow side or at the outflow side of the at least one first heat exchanger (9) and/or is integrated in the at least one first heat exchanger (9).

9. The device as claimed in one of the preceding claims, **characterised in that** the at least one flow duct (6) is designed in the manner of a flat tube and/or in the manner of a disk or plate.

10. The device as claimed in one of the preceding claims, **characterised in that** at least one fin element (22), in particular at least one corrugated fin for increasing heat transfer, is arranged in the at least one first flow duct (7), and/or is connected to at least one third flow duct (6).

11. The device as claimed in one of the preceding claims, **characterised in that** at least one housing (2) for holding the at least one first heat exchanger (9) is embodied as an intake pipe for an engine unit (13).

12. The device as claimed in one of the preceding claims, **characterised in that** the at least one first heat exchanger (9) is an evaporator for a refrigerant circuit (KÄK, KÄKB).

13. The device as claimed in one of the preceding claims, **characterised in that** at least one additional throttle flap (3) is arranged at the inflow side and/or outflow side of the at least one first heat exchanger (9).

14. The device as claimed in one of the preceding claims, **characterised in that** an infeed device (10) for feeding recirculated and/or cooled exhaust gas of an internal combustion engine (13) into the first medium is arranged at the inflow side and/or outflow side of the at least one first heat exchanger (9).

15. The device as claimed in claim 14, **characterised in that** the infeed device (10) is designed in the manner of a flat tube and/or has at least one infeed opening (11) for feeding in in particular recirculated and/or cooled exhaust gas.

16. The device as claimed in claim 15, **characterised in that** the at least one infeed opening (11) is designed substantially in the manner of a slot and/or is arranged substantially perpendicular to a charge-air flow direction (LE).

17. The device as claimed in one of the preceding claims, **characterised in that** a mixing device (12) for mixing cooled first medium with uncooled first medium, and/or with in particular recirculated and/or cooled exhaust gas, is arranged at the outflow side of the at least one first heat exchanger (9) and/or of the at least one infeed device (10).

18. A system having a device as claimed in one of the preceding claims, having at least one internal combustion engine (13), at least one refrigerant circuit (KÄK, KÄKB) with at least one second heat exchanger (KV), in particular with an evaporator for an air-conditioning system, at least one third heat exchanger (LLVK) for charge-air pre-cooling, and at least one turbocharger (TL) for charging the charge air.

19. The system as claimed in claim 18, **characterised in that** the system (40, 50) has at least one fourth heat exchanger (KO), in particular a condenser for an air-conditioning system, and/or at least one valve device (17, V1, V2), in particular an expansion valve.

20. The system as claimed in claim 18 or 19, **characterised in that** the system (40, 50) has at least one coolant circuit (KÜK) for indirect charge-air cooling, wherein the third heat exchanger (LLVK) for charge-air pre-cooling is arranged in the coolant circuit (KÜK), and/or the system (40, 50) has at least one fifth heat exchanger (KMK) for cooling the coolant by means of ambient air.

21. The system as claimed in one of claims 16 to 18, **characterised in that** the system (40, 50) has at least one sixth heat exchanger for exhaust-gas cooling (16) for the infeed device (10).

## Revendications

1. Dispositif servant au refroidissement de l'air de suralimentation pour un moteur à combustion interne (13) d'un véhicule automobile, ledit dispositif présentant au moins un premier échangeur de chaleur (9) servant au refroidissement de l'air de suralimentation, comprenant au moins un premier conduit d'écoulement (7) servant à la circulation concernant un premier flux partiel d'un premier milieu, comprenant au moins un deuxième conduit d'écoulement (8) servant à la circulation concernant un deuxième flux partiel du premier milieu, et comprenant également au moins un troisième conduit d'écoulement (6) servant à la circulation concernant un liquide de refroidissement et / ou un fluide frigorigène, où le premier conduit d'écoulement (7) est en liaison thermique avec le troisième conduit d'écoulement (6) au moins au nombre de un, et le deuxième conduit d'écoulement au moins au nombre de un est thermiquement isolé, **caractérisé en ce qu'**il est prévu au moins un dispositif de régulation (4) servant à la régulation de la température et à un mélange uniforme des températures des deux flux partiels après circulation à travers le premier échangeur de chaleur (9), où le premier conduit d'écoulement (7) au moins au nombre de un et le deuxième conduit d'écoulement (8) au moins au nombre de un sont disposés entre des troisièmes conduits d'écoulement adjacents (6) et pratiquement de manière perpendiculaire aux troisièmes conduits d'écoulement (6), où des premiers conduits d'écoulement (7) et des deuxièmes conduits d'écoulement (8) sont disposés de manière alternée entre des troisièmes conduits d'écoulement adjacents (6).

2. Dispositif selon la revendication 1, **caractérisé en ce que** le dispositif de régulation (4) présente au moins un élément de fermeture (5) servant à la fermeture au moins partielle du premier conduit d'écoulement (7) au moins au nombre de un et / ou du deuxième conduit d'écoulement (8) au moins au nombre de un.

3. Dispositif selon l'une des revendications précédentes, **caractérisé en ce que** le dispositif de régulation (4) est configuré en forme de tiroir à lamelles.

4. Dispositif selon la revendication 2 ou 3, **caractérisé en ce que** l'élément de fermeture (5) au moins au nombre de un est configuré en forme de lamelles.

5. Dispositif selon la revendication 2, 3 ou 4, **caractérisé en ce que** l'élément de fermeture (5) au moins au nombre de un présente une largeur d'élément de fermeture qui correspond à un premier intervalle (b1+d, b2+d, a+d) compris entre deux troisièmes conduits d'écoulement (6) disposés de manière adjacente.

6. Dispositif selon l'une quelconque des revendications 2 à 5, **caractérisé en ce que** des éléments de fermeture adjacents (5) sont disposés, les uns par rapport aux autres, suivant un deuxième intervalle (a, b1, b2).

7. Dispositif selon l'une quelconque des revendications 2 à 6, **caractérisé en ce que** des éléments de fermeture adjacents (5) sont reliés les uns aux autres au moyen au moins d'un élément d'assemblage (21) pour la fermeture.

8. Dispositif selon l'une quelconque des revendications précédentes, **caractérisé en ce que** le dispositif de régulation (4) est disposé côté alimentation ou côté sortie du premier échangeur de chaleur (9) au moins au nombre de un et / ou est intégré dans le premier échangeur de chaleur (9) au moins au nombre de un.

9. Dispositif selon l'une quelconque des revendications précédentes, **caractérisé en ce que** le conduit d'écoulement (6) au moins au nombre de un est configuré en forme de tube plat et / ou en forme de disque ou de plaque.

10. Dispositif selon l'une quelconque des revendications précédentes, **caractérisé en ce qu'**au moins un élément d'ailette (22), en particulier au moins une ailette ondulée servant à l'augmentation de la transmission de chaleur, est disposé(e) dans le premier conduit d'écoulement (7) au moins au nombre de un et / ou relié(e) à au moins un troisième conduit d'écoulement (6).

11. Dispositif selon l'une quelconque des revendications précédentes, **caractérisé en ce qu'**au moins un carter (2) servant au logement du premier échangeur de chaleur (9) au moins au nombre de un est configuré comme servant de conduit d'admission pour un groupe moteur (13).

12. Dispositif selon l'une quelconque des revendications précédentes, **caractérisé en ce que** le premier échangeur de chaleur (9) au moins au nombre de un est un évaporateur pour un circuit de fluide frigorigène (KÄK, KÄKB).

13. Dispositif selon l'une quelconque des revendications précédentes, **caractérisé en ce qu'**au moins un papillon des gaz (3) supplémentaire est disposé côté alimentation et / ou côté évacuation du premier échangeur de chaleur (9) au moins au nombre de un.

14. Dispositif selon l'une quelconque des revendications précédentes, **caractérisé en ce qu'**un dispositif d'alimentation (10) servant à l'alimentation, dans le premier milieu, de gaz d'échappement d'un moteur à combustion interne (13), qui sont recyclés et / ou refroidis, est disposé côté alimentation et / ou côté évacuation du premier échangeur de chaleur (9) au moins au nombre de un.

15. Dispositif selon la revendication 14, **caractérisé en ce que** le dispositif d'alimentation (10) est configuré en forme de tube plat et / ou présente au moins une ouverture d'alimentation (11) servant à l'alimentation en particulier de gaz d'échappement recyclés et / ou refroidis.

16. Dispositif selon la revendication 15, **caractérisé en ce que** l'ouverture d'alimentation (11) au moins au nombre de un est configurée en ayant pratiquement la forme d'un trou oblong et / ou est disposée pratiquement de manière perpendiculaire à une direction d'écoulement (LE) de l'air de suralimentation.

17. Dispositif selon l'une quelconque des revendications précédentes, **caractérisé en ce qu'**un dispositif mélangeur (12) servant au mélange d'un premier milieu refroidi, avec un premier milieu non refroidi, et / ou avec en particulier des gaz d'échappement recyclés et / ou refroidis, est disposé côté évacuation du premier échangeur de chaleur (9) au moins au nombre de un et / ou du dispositif d'alimentation (10) au moins au nombre de un.

18. Système comprenant un dispositif selon l'une quelconque des revendications précédentes, ledit système présentant au moins un moteur à combustion interne (13), au moins un circuit de fluide frigorigène (KÄK, KÄKB), et comprenant au moins un deuxième échangeur de chaleur (KV), comprenant en particulier un évaporateur pour un système de climatisation, comprenant au moins un troisième échangeur de chaleur (LLVK) servant au prérefroidissement de l'air de suralimentation, et comprenant également au moins un turbocompresseur (TL) servant à la suralimentation de l'air de suralimentation.

19. Système selon la revendication 18, **caractérisé en ce que** le système (40, 50) présente au moins un quatrième échangeur de chaleur (KO), en particulier un condenseur pour un système de climatisation, et / ou au moins un dispositif à soupape (17, V1, V2), en particulier un détendeur.

20. Système selon la revendication 18 ou 19, **caractérisé en ce que** le système (40, 50) présente au moins un circuit de liquide de refroidissement (KÜK) servant au refroidissement indirect de l'air de suralimentation, où le troisième échangeur de chaleur (LLVK) servant au prérefroidissement de l'air de suralimentation est disposé dans le circuit de liquide de refroidissement (KÜK) et / ou le système (40, 50) présente au moins un cinquième échangeur de chaleur (KMK) servant au refroidissement du liquide de refroidissement au moyen de l'air ambiant.

21. Système selon l'une quelconque des revendications 16 à 18, **caractérisé en ce que** le système (40, 50) présente au moins un sixième échangeur de chaleur servant au refroidissement des gaz d'échappement (16) pour le dispositif d'alimentation (10).
